# EUROPÄISCHE PATENTSCHRIFT

(11) **EP 2 397 394 B1**
(45) Veröffentlichungstag und Bekanntmachung des Hinweises auf die Patenterteilung: **26.08.2015**
(21) Anmeldenummer: 11169164.8
(22) Anmeldetag: 08.06.2011
(51) Int. Cl.: B62D 33/02, B60J 7/06

(54) **Nutzfahrzeuganordnung mit Planen-Schiebeverdeck**
Commercial vehicle assembly with plan sliding roof
Agencement de véhicule utilitaire doté d'un toit coulissant plat

(30) Priorität: 18.06.2010 DE 102010017452
(43) Veröffentlichungstag der Anmeldung: 21.12.2011
(73) Patentinhaber: TSE Trailer-System-Engineering GmbH & Co. KG, 72365 Ratshausen (DE)
(72) Erfinder: Boll, Uwe, 72348 Rosenfeld-Leidringen (DE)
(74) Vertreter: Baur & Weber Patentanwälte

(56) Entgegenhaltungen:
- EP-A1- 1 782 986
- EP-A1- 2 106 947
- EP-A2- 1 122 108
- WO-A1-97/32745
- WO-A1-2012/010618
- WO-A2-2006/105779

## Beschreibung

Die Erfindung betrifft eine Nutzfahrzeuganordnung mit einem Planen-Schiebeverdeck.

Bei Nutzfahrzeugen mit Planen-Schiebeverdeck sind an beidseitig oben am Laderaum angeordneten Dachholmen Rollenwagen mit Querspriegeln in Längsrichtung der Dachholme verschiebbar geführt. Zwischen benachbarten Rollenwagen sind jeweils Scherenbügel angeordnet, deren Bügelschenkel gelenkig miteinander und mit den Rollenwagen verbunden sind. Bei geschlossenem Schiebeverdeck sind die Scherenbügel gestreckt und die Dachplane verläuft im wesentlichen eben. Zum Öffnen des Schiebeverdecks werden die Rollenwagen entlang der Dachholme und benachbarte Rollenwagen aufeinander zu verschoben, wobei die Scherenbügel aufgerichtet werden. Die Dachplane wird dabei an Positionen zwischen den Scherenbügeln angehoben und aus der im wesentlichen ebenen Form der geschlossenen Form in eine aufgefaltete Form bei geöffnetem Schiebeverdeck verlagert.

Aus der WO 97/32745 A1 ist eine Öffnungsvorrichtung zum Öffnen eines Behälters mit einem Verdeck bekannt. Die Vorrichtung besteht aus zwei parallelen Schienen, einem entlang den Schienen verschiebbaren Gleitschlitten, Führungsleisten, deren Oberseite dem Verdeck zugewandt ist, zum Führen und, wenn es geöffnet ist, zum Zusammenfalten des Verdecks, und Befestigungsmittel zum Befestigen eines freien Endes jeder Führungsleiste an einem Schlitten. Die Führungsleisten sind aus gegossenem Kunststoff und weisen wenigstens ein Mittelteil und zwei Seitenabschnitte auf. Jeder der Seitenabschnitte ist an dem Mittelabschnitt über einen dünnen Gelenkabschnitt angelenkt.

Im sogenannten TIR-Transitverkehr werden Laderäume von ein Staatsgebiet lediglich durchfahrenden Nutzfahrzeugen von Zollbehörden bei der Einreise verplombt, um sicherzustellen, dass während der Durchfahrt nicht unbefugt Waren in den Laderaum eingefügt oder aus diesem entnommen werden. Hierfür sind im Bereich der Dachplane eines Schiebeverdecks beispielsweise Durchgreifsicherungen vorgeschrieben. Vorschriften und Beispiele sind z. B. in einem "LEITFADEN ZOLLSICHERE HERRICHTUNG VON STRASSENFAHR-ZEUGEN UND BEHÄLTERN MIT SCHUTZDECKE", Januar 2010, von der Bundesfinanzdirektion Nord, Hamburg aufgeführt. Ein darin gegebenes Beispiel sieht von einem Mittelteil eines Scherenbügels abstehende Kunststoffnocken als Sperrmittel gegen Durchgreifen vor.

Der vorliegenden Erfindung liegt die Aufgabe zugrunde, eine Nutzfahrzeuganordnung mit einem den Zollvorschriften für TIR-Verkehr genügenden Planen-Schiebeverdeck anzugeben.

Die Erfindung ist im Patentanspruch 1 beschrieben. Die abhängigen Ansprüche enthalten vorteilhafte Ausgestaltungen und Weiterbildungen der Erfindung.

Gemäß der vorliegenden Erfindung sind an beiden in den Scherenbügeln jeweils enthaltenen Bügelschenkeln Fortsätze angeordnet, welche in der geschlossenen Stellung des Schiebeverdecks mit gestreckten Scherenbügeln von den Bügelschenkeln nach unten ragen. In der vollständig geöffneten Stellung des Schiebeverdecks mit aufgerichteten Scherenbügeln überlappen die Fortsätze der beiden Bügelschenkel eines Scherenbügels miteinander in einer zu den Gelenkachsen der Gelenke der Scherenbügel parallelen Projektionsrichtung.

Bei einem unbefugten Versuch, bei geschlossenem und verriegeltem Schiebeverdeck einen Scherenbügel zwischen benachbarten Rollenwagen anzuheben und darunter durchzugreifen, engen die Fortsätze den Raum zwischen den leicht angehobenen Bügelschenkeln und dem Dachholm ein und erschweren oder verhindern so ein Durchgreifen von außen in den Laderaum.

Als ein Bestandteil der Zollsicherung eines Planen-Schiebeverdecks kann vorgesehen sein, dass ein Planensaum der Dachplane mit an den Außenseiten der Dachholme liegenden Abschnitten mit den Rollenwagen an gegen die Oberseite der Rollenwagen abgesenkten Stellen verbunden sein kann. Beim Aufrichten der Scherenbügel in die geöffnete Stellung kann dann das Anheben der Plane erschwert sein und zu starken Spannungen in der Plane führen.

Eine vorteilhafte Ausführung eines Scheren bügels sieht daher in an sich bekannter Weise vor, dass die kumulierte Länge eines Scherenbügels zwischen den Scherengelenken der Bügelschenkel an den Rollenwagen in der gestreckten Stellung des Scherenbügels größer ist als in der aufgerichteten Stellung. In bevorzugter Ausführung kann hierfür wenigstens ein Bügelschenkel eines Scherenbügels, insbesondere nur einer der beiden Bügelschenkel eines Scherenbügels, in seiner Länge veränderlich sein. Vorteilhafterweise sind die beiden Bügelschenkel eines Scherenbügels unmittelbar miteinander gelenkig verbunden, also insbesondere ohne zusätzliches mit jedem der beiden Bügelschenkel gelenkig verbundenes Mittelteil ausgeführt. Vorzugsweise sind beide Bügelschenkel in sich in der Weise starr ausgeführt, dass im Verlauf des jeweiligen Bügelschenkels kein Gelenk vorhanden ist. Eine Längenveränderung eines Bügelschenkels ist vorzugsweise durch relativ zueinander verschiebbar geführte Schenkelabschnitte ermöglicht.

In bevorzugter, an sich bekannter Ausführung enthält ein Scherenbügel jeweils einen ersten Bügelschenkel fester Länge, welcher durch einen in Draufsicht auf den gestreckten Scherenbügel ungefähr eine zu einem Rollenwagen hin offene U-Form bildet und vorzugsweise durch einen einteilig durchgehenden mehrfach umgebogenen Draht gebildet ist. Ein Fortsatz eines solchen Bügelschenkels im Sinne der Erfindung kann vorteilhafterweise durch mehrfache Umbiegung des Drahtes gebildet sein.

Ein zweiter, in seiner Länge veränderlicher Bügelschenkel besteht in bevorzugter Ausführung aus zwei Teilen, wobei ein erstes Teil vorteilhafterweise durch einen Blechkörper gebildet ist. Ein zweites Teil kann vorteilhafterweise wiederum durch einen Drahtbügel gebildet sein, welcher in dem Blechkörper um ein begrenztes Maß verschiebbar geführt ist. Ein Fortsatz an einem solchen Bügelschenkel ist vorteilhafterweise als ein Blechfortsatz gebildet.

Die Fortsätze der Bügelschenkel seien in Projektion in der bereits genannten Projektionsrichtung, die parallel zu den Gelenkachsen des Scherenbügels verläuft, als gegen direkte Verbindungen unmittelbar benachbarter Gelenke vorspringende Strukturen verstanden. Die genannten direkten Verbindungen zwischen unmittelbar benachbarten Gelenken eines Scherenbügels liegen bei gestreckter Stellung des Scherenbügels annähernd parallel zur Längsrichtung des Dachholms und die Fortsätze bilden nach unten vorspringende Strukturen. In der vollständig aufgerichteten Stellung des Scherenbügels begrenzen die direkten Verbindungen unmittelbar benachbarter Gelenke eines Scherenbügels mit dem Dachholm in der genannten Projektion eine Innenfläche, insbesondere eine im wesentlichen dreickförmige Innenfläche.

In einer ersten vorteilhaften Ausführung liegen die Fortsätze der beiden Bügelschenkel bei Projektion in der genannten Projektionsrichtung im wesentlichen vollständig innerhalb der Innenfläche, so dass der Planenverlauf um den aufgerichteten Scherenbügel eine besonders geringe kumulierte Länge aufweist und Spannungen der Plane beim Öffnen des Verdecks besonders gering bleiben.

In anderer vorteilhafter Ausführungsform ragt der Vorsprung wenigstens eines der Bügelschenkel in der aufgerichteten Stellung des Scherenbügels in Richtung des anderen Bügelschenkels über die genannte Innenfläche hinaus. Eine dadurch eventuell verursachte Erhöhung der kumulierten Länge des Planenverlaufs über den aufgerichteten Scherenbügel kann durch die Längenveränderbarkeit wenigstens eines der Bügelschenkel kompensiert werden, so dass die Längenveränderbarkeit wenigstens eines Bügelschenkels eine besonders vorteilhafte Kombination mit einem Überstand eines Fortsatzes über den anderen Bügelschenkel in der aufgerichteten Stellung darstellt.

Die Fortsätze können vorteilhafterweise in der gestreckten Stellung der Scherenbügel seitlich neben den Dachholmen liegen und in Projektion in der genannten Projektionsrichtung mit den Dachholmen überlappen. Die Fortsätze können in der gestreckten Stellung der Scherenbügel auch in Vertiefungen im Dachholm liegen.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste Ausführung bei gestrecktem Scherenbügel,
- Fig. 2: die Ausführung nach Fig. 1 bei aufgerichtetem Scherenbügel,
- Fig. 3: eine isolierte Schrägansicht eines aufgerichteten Schwenkbügels,
- Fig. 4: eine zweite Ausführung bei gestrecktem Scherenbügel,
- Fig. 5: die Ausführung nach Fig. 4 bei leicht angehobenem Scherenbügel,
- Fig. 6: die Anordnung nach Fig. 4 bei aufgerichtetem Scherenbügel.

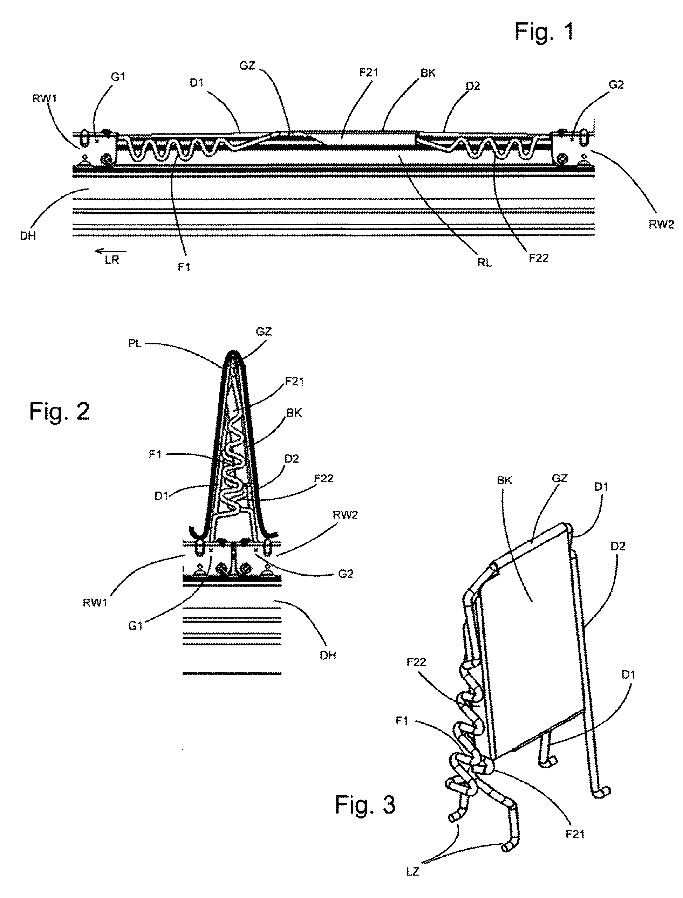

Fig. 1 zeigt einen Ausschnitt aus einem Schiebeverdeck einer Nutzfahrzeuganordnung mit Blickrichtung in einer nachfolgend als Projektionsrichtung bezeichneten Richtung. In der Darstellung nach Fig. 1 ist der Übersichtlichkeit halber die Dachplane selbst, welche flach auf dem dargestellten Ausschnitt aufliegt, nicht mit eingezeichnet. Der Ausschnitt erfasst den Bereich zweier in einer Längsrichtung LR aufeinanderfolgender Rollenwagen RW1, RW2, welche jeweils teilweise dargestellt sind. Der Ausschnitt wiederholt sich in Längsrichtung LR über die Länge des Laderaums der Nutzfahrzeuganordnung mehrfach in jeweils gleichem Aufbau. Ein Dachholm DH erstreckt sich in Längsrichtung LR über die Länge des Laderaums durchgehend und weist insbesondere eine Rollenführungsbahn RL auf, in welcher Laufrollen der Rollenwagen RW1, RW2 geführt sind und eine Verschiebung der Rollenwagen entlang des Dachholms zum Wechsel zwischen einer geschlossenen Stellung des Schiebeverdecks und einer geöffneten Stellung ermöglichen.

Der in Fig. 1 dargestellte Ausschnitt aus dem Schiebeverdeck zeigt neben dem Abschnitt des Dachholms DH und der in der Rollenführung LR verfahrbar geführten Rollenwagen RW1, RW2 insbesondere einen Scherenbügel mit zwei Bügelschenkeln. Von einem ersten Bügelschenkel sind ein erster Drahtabschnitt D1 und ein Fortsatz F1 in Form eines mehrfach umgebogenen Drahtabschnitts sichtbar. Die Drahtabschnitte D1 und F1 sind im Bereich eines Mittengelenks GZ des Scherenbügels über einen in Projektionsrichtung senkrecht zur Zeichenebene verlaufenden weiteren Drahtabschnitt miteinander verbunden. An ihren dem Mittengelenk GZ des Scherenbügels abgewandten Enden sind die Drahtabschnitte D1 und F1 in einem ersten Scherengelenk G1 schwenkbar an dem Rollenwagen RW1 gehalten. Die sichtbaren Drahtabschnitte D1 und F1 und der senkrecht zur Zeichenebene verlaufende Verbindungs-Drahtabschnitt bilden in Draufsicht auf den Scherenbügel im wesentlichen eine U-Form, welche zu dem Rollenwagen RW1 hin eine Öffnung aufweist. Der Fortsatz F1 liegt seitlich neben dem Dachholm DH und überlappt mit diesem in Projektion in der die Blickrichtung der Fig. 1 bildenden Projektionsrichtung. Der Drahtabschnitt D1 des ersten Bügelschenkels sei als im wesentlichen gerade zwischen dem ersten Scherengelenk G1 und dem Mittengelenk GZ verlaufend angenommen.

Das Mittengelenk GZ liegt über der oberen Begrenzungsebene des Dachholms DH und kann insbesondere auch in der dargestellten gestreckten Stellung auf dem Dachholm aufliegen. Vorteilhafterweise liegt das erste Scherengelenk G1 geringfügig tiefer als das Mittengelenk GZ, so dass beim Verfahren der Rollenwagen RW1, RW2 aufeinander zu ein Abwinkeln des Scherenbügels zuverlässig gewährleistet ist. Der vorteilhafterweise gerade Drahtabschnitt D1, welcher in der gestreckten Stellung auch leicht auf Biegung vorgespannt sein kann, liegt vorteilhafterweise in Blickrichtung der Fig. 1 hinter dem Dachholm DH. Der Fortsatz F1 als mehrfach umgebogener Drahtabschnitt liegt mit seinen mehreren Teilabschnitten der mehrfachen Umbiegung vorteilhafterweise in einer zur Zeichenebene der Fig. 1 parallelen Ebene und befindet sich senkrecht zur Zeichenebene der Fig. 1 vorzugsweise innerhalb eines Bereichs, über welchen sich auch die Rollenwagen RW1, RW2 neben dem Dachholm DH senkrecht zur Zeichenebene auf den Beobachter zu erstrecken.

Ein zweiter Bügelschenkel des Scherenbügels ist in der dargestellten bevorzugten Ausführung zweigeteilt und enthält als ein erstes Teil einen Blechkörper BK aus einem oder mehreren umgeformten Blechen. Der Blechkörper BK bildet insbesondere in vorteilhafter Ausführung eine Gelenkbuchse für den mittleren Drahtabschnitt des ersten Bügelschenkels und umgreift diesen mittleren Drahtabschnitt des ersten Bügelschenkels in der Art, dass der erste Bügelschenkel relativ zu dem Blechkörper BK um das Mittengelenk GZ verschwenkbar ist.

An dem Blechkörper BK ist ein zweiter Fortsatz F21 ausgebildet, welcher von dem Blechkörper in der in Fig. 1 dargestellten gestreckten Stellung des Scherenbügels nach unten ragt und in Projektion in der Projektionsrichtung senkrecht zur Zeichenebene der Fig. 1 mit dem Dachholm überlappt. Der Blechkörper BK liegt mit seinem Hauptteil über der oberen Begrenzungsebene des Dachholms DH und kann insbesondere in der dargestellten gestreckten Stellung des Scherenbügels auch auf dem Dachholm aufliegen.

Der zweite Bügelschenkel enthält an der dargestellten bevorzugten Ausführungsform ein zweites Teil in Form eines weiteren Drahtbügels, welcher in zu dem ersten Scherenbügel ähnlicher Ausführung einen geraden Drahtabschnitt D2 und einen mehrfach umgebogenen weiteren Drahtabschnitt F22 aufweist. Der weitere Drahtabschnitt F22 bildet an dem zweiten Bügelschenkel einen weiteren Fortsatz, welcher in Projektion senkrecht zur Zeichenebene der Fig. 1 in der gestreckten Stellung des Scherenbügels mit dem Dachholm DH überlappt.

Die in Fig. 1 rechts liegenden Enden der Drahtabschnitte D2 und F22 seien wiederum in einem zweiten Scherengelenk G2 gelenkig an dem zweiten Rollenwagen RW2 gehalten. Die Gelenkachsen des ersten Scherengelenks G1, des zweiten Scherengelenks G2 und des Mittengelenks GZ verlaufen senkrecht zur Zeichenebene der Fig. 1 und damit parallel zu der genannten Projektionsrichtung. In gewöhnlicher Betriebsstellung der Nutzfahrzeuganordnung verlaufen diese Gelenkachsen horizontal und quer zur die Haupt-Fahrtrichtung bildenden Längsrichtung LR.

Dem zweiten Scherengelenk G2 abgewandt sind die beiden Drahtabschnitte D2 und F22 vorteilhafterweise wieder über einen oder mehrere Drahtabschnitte miteinander verbunden und Bestandteile eines Drahtbügels aus einem durchgehenden, mehrfach umgebogenen Draht ausgebildet, welcher zwischen zwei senkrecht zur Zeichenebene der Fig. 1 beabstandeten Gelenkpunkten des zweiten Scherengelenks G2 einteilig durchgehend verläuft.

Das zweite Teil des zweiten Bügelschenkels mit Drahtabschnitten D2 und F22 ist relativ zu dem Blechkörper BK in Richtung zwischen dem zweiten Scherengelenk G2 und dem Mittengelenk GZ verschiebbar geführt, so dass der zweite Bügelschenkel in seiner als Abstand zwischen dem zweiten Scherengelenk G2 und dem Mittengelenk G2 angesehener Erstreckung längenveränderlich ist. In der gestreckten Stellung des Scherenbügels nach Fig. 1 nimmt der zweite Bügelschenkel eine maximale Länge zwischen dem zweiten Scherengelenk G2 und dem Mittengelenk GZ ein. Die gestreckte Stellung des Scherenbügels entspricht der geschlossenen Stellung des Schiebeverdecks, in welcher die Dachplane im wesentlichen flach über den Rollenwagen und den Scherenbügeln und die Breite des Laderaums überbrückenden Spriegeln oder Querbügeln aufliegt.

Zum Öffnen des Schiebeverdecks werden die Rollenwagen RW1, RW2 entlang des Dachholms aufeinander zu verschoben, wobei beide Rollenwagen entlang des Dachholms verfahren werden und sich dabei der gegenseitige Abstand der Rollenwagen verringert. Hierbei richten sich die beiden Bügelschenkel des Scherenbügels unter Verschwenkung um die beiden Scherengelenke G1, G2 und unter Anhebung des Mittengelenks GZ auf und nehmen bei vollständig geöffnetem Schiebeverdeck die in Fig. 2 dargestellte aufgerichtete Stellung ein. Die beiden Rollenwagen RW1, RW2 sind auf minimalen Abstand zusammen gefahren.

In der in Fig. 2 dargestellten aufgerichteten Stellung des in Fig. 1 in gestreckter Stellung dargestellten Scherenbügels bilden die in Fig. 1 nach oben weisenden Begrenzungen der beiden Bügelschenkel mit dem geraden Drahtabschnitt D1 des ersten Bügelschenkels und dem Blechkörper BK und dem geraden Drahtabschnitt D2 des zweiten Scherenbügels in Projektion in Richtung der Projektionsrichtung parallel zu den Gelenkachsen einen nach unten durch den Dachholm bzw. die Oberseiten der Rollenwagen RW1, RW2 begrenzten annähernd dreieckförmigen Innenfläche. Die in Fig. 1 bei Projektion in Projektionsrichtung mit dem Dachholm überlappenden Fortsätze F1, F21 und F22 liegen in der aufgerichteten Stellung bei Projektion in der genannten Projektionsrichtung vorteilhafterweise im wesentlichen vollständig innerhalb dieser dreieckförmigen Innenfläche. Hierdurch kann die kumulierte Länge der in Fig. 2 mit angedeuteten Dachplane PL besonders kurz und die Spannung in der Plane besonders niedrig gehalten werden. Bei der Spannung der Dachplane ist zu berücksichtigen, dass diese typischerweise unterhalb der oberen Begrenzungsebene der Dachholme an Seitenflächen der Rollenwagen befestigt sein kann.

In der aufgerichteten Stellung des Scherenbügels nach Fig. 2 weist der zweite Bügelschenkel mit Blechkörper BK als erstem und Drahtabschnitten D2, F22 als zweitem Teil zwischen dem zweiten Scherengelenk G2 und dem Mittengelenk GZ eine geringere Länge auf als in der gestreckten Stellung nach Fig. 1, wodurch sich die kumulierte Länge der Bügelschenkel gegenüber der gestreckten Stellung nach Fig. 1 verringert und das Problem einer übermäßigen Planenspannung in der aufgerichteten Stellung des Scherenbügels gemindert ist.

In einem vom Zoll verplombten Zustand des Schiebeverdecks, in welchem beispielsweise ein Stahlseil in einem seitlich des Dachholms liegenden Planensaum ein nennenswertes Anheben der Plane verhindert, sind die Längspositionen der Rollenwagen RW1, RW2 weitgehend fixiert. Es besteht dennoch die Möglichkeit, unbefugterweise unter dem Planensaum durchzugreifen und den Scherenbügel im Bereich des Mittengelenks GZ um ein geringes Maß anzuheben und zwischen dem Scherenbügel und dem Dachholm hindurch zu greifen. Ein solches Durchgreifen ist dadurch erschwert, dass die Fortsätze F1, F21, F22 in einen beim Anheben des Scherenbügels entstehenden Raum zwischen dem Scherenbügel und dem Dachholm ragen und den zum Durchgreifen zur Verfügung stehenden Raum einschränken.

Fig. 3 zeigt in Schrägansicht einen isolierten Scherenbügel in einer zu Fig. 2 analogen aufgerichteten Stellung. Die den ersten Bügelschenkel und den zweiten Teil des zweiten Bügelschenkels bildenden jeweils mehrfach umgebogenen Drähte sind zusätzlich an Stellen, an welchen Krümmungen beginnen, enden oder wechseln, mit Querlinien versehen, um die räumliche Struktur der Drahtbügel zu veranschaulichen. Gut zu erkennen ist die flächige Struktur des Blechkörpers BK, welcher vorzugsweise aus zwei in geringem Abstand voneinander angeordneten und miteinander verbundenen Blechflächen aufgebaut ist, welche zwischen sich eine Führung für den das zweite Teil des zweiten Bügelschenkels bildenden Drahtbügels ausbilden. Der zweite Fortsatz F21 ist mit der nach außen weisenden Blechfläche des Blechkörpers BK einteilig ausgebildet und gegen diese umgebogen und liegt in Fig. 3 zwischen den jeweils mehrfach umgebogenen Drahtabschnitten F1 und F22. Die Enden der Drähte sind in Lagerzapfen LZ in Richtung der Gelenkachsen G1, G2 umgebogen und greifen im montierten Zustand in Lageröffnungen der Rollenwagen ein. Ein Scherenbügel der in Fig. 3 skizzierten Art, aber ohne die Fortsätze F1, F21, F22 ist an sich bekannt und in Gebrauch.

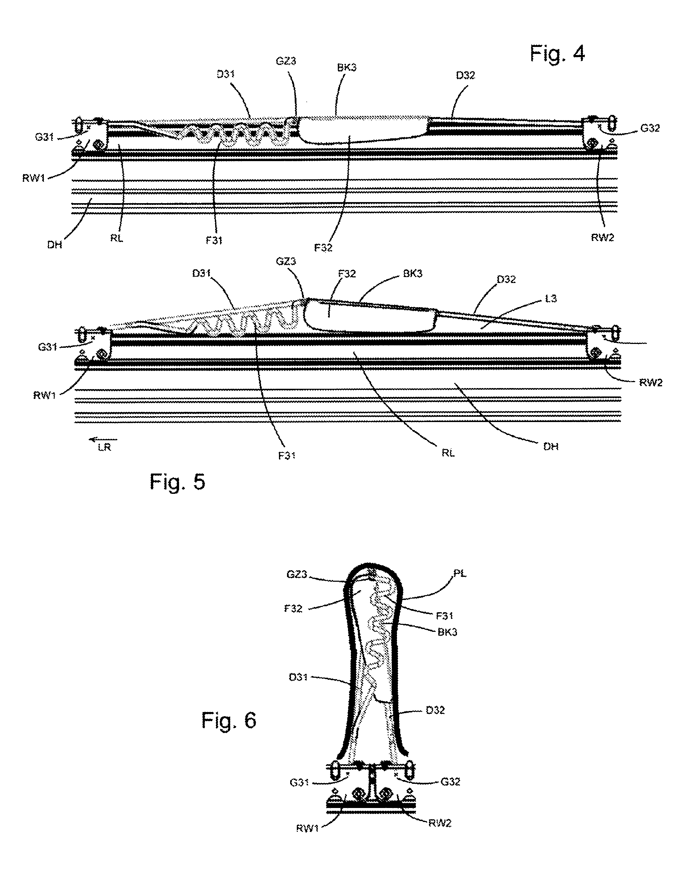

Fig. 4 zeigt eine zweite Ausführung in zu Fig. 1 entsprechender Ansicht. Der erste Bügelschenkel, welcher in einem ersten Scherengelenk G31 am ersten Rollenwagen RW1 schwenkbar angelenkt ist, enthalte wiederum in Form eines durchgehenden, mehrfach umgebogenen Drahtes einen ersten, im wesentlichen geraden Drahtabschnitt D31 und einen mehrfach umgebogenen zweiten Drahtabschnitt in Form eines nach unten weisenden Fortsatzes F31, wobei die beiden Drahtabschnitte D31 und F31 wiederum über einen mittleren Drahtabschnitt im Mittengelenk GZ3 verbunden sind. Während in der Ausführung nach Fig. 1 die vertikale Tiefe des Fortsatzes F1 von dem Mittengelenk GZ in Richtung des Rollenwagens RW1 hin zunimmt, ist der Verlauf des Fortsatzes F31 in der Ausführung nach Fig. 4 so, dass hier nahe bei dem Mittengelenk GZ3 eine größere Tiefe des Fortsatzes vorliegt, welche in Richtung des Rollenwagens RW1 abnimmt. Als vertikale Tiefe sei der vertikale Abstand der unteren Begrenzung der jeweiligen Fortsätze von der oberen Begrenzung der zugehörigen Bügelschenkel bezeichnet.

Ein zweiter Bügelschenkel in der Ausführung nach Fig. 4 bestehe wiederum aus einem ersten Teil in Form eines Blechkörpers BK3 mit einem nach unten ragenden Fortsatz F32 und einem zweiten Teil in Form eines Drahtbügels D32.

Der Fortsatz F32 an dem Blechkörper BK3 ist in dieser Ausführung insbesondere nahe bei dem Mittengelenk GZ3 mit wesentlich größerer Tiefe ausgeführt als der Fortsatz F21 in der Ausführung nach Fig. 1.

Fig. 6 zeigt in zu Fig. 2 analoger Darstellungsweise den in Fig. 4 in gestreckter Position dargestellten Scherenbügel in aufgerichteter Stellung bei geöffnetem Schiebeverdeck, wobei wiederum der Verlauf der Plane PL mit angedeutet ist. Wesentlicher Unterschied dieser Ausführungsform in der aufgerichteten Stellung ist, dass die Fortsätze F31 am ersten Bügelschenkel und F32 am Blechkörper BK3 des zweiten Bügelschenkels über die den Ausführungen zu Fig. 2 eingeführte und erläuterte Innenfläche hinausragen. Als Innenfläche sei hierbei in Projektion in der Projektionsrichtung senkrecht zur Zeichenebene die Fläche zwischen den in Fig. 4 die Oberseite des Scherenbügels bildenden geraden Drahtabschnitten D31 und D32 und dem Blechkörper BK3 sowie dem Dachholm bzw. dem Rollenwagen als unterer Begrenzung angesehen.

Der Fortsatz F32 an dem Blechkörper BK3 des zweiten Bügelschenkels ragt in der Projektionsdarstellung nach Fig. 6 in Richtung des geraden Drahtabschnitts D31 des ersten Scherenbügels seitlich über diesen und damit die durch den geraden Drahtabschnitt D31 begrenzte Innenfläche hinaus und bildet in der aufgerichteten Stellung des Scherenbügels in der Nähe des Mittengelenks GZ3 einen seitlich in Längsrichtung LR weg ragenden Wulst.

In entsprechender Weise ragt der erste Fortsatz F31, welcher durch den mehrfach umgebogenen Drahtabschnitt des ersten Bügelschenkels gebildet ist, in der Stellung nach Fig. 6 in Richtung des Blechkörpers BK3 über diesen bzw. die von diesem begrenzte dreieckförmige Innenfläche hinaus und bildet seinerseits wiederum einen seitlich über den zweiten Bügelschenkel hinausragenden Wulst. Die kumulierte Länge der Dachplane PL ist damit in Fig. 6 größer als in der Ausführungsform nach Fig. 2, was durch entsprechende Gestaltung der Längenveränderbarkeit des zweiten Bügelschenkels kompensiert werden kann.

In dem zweiten Bügelschenkel ist das zweite Teil in Form eines Drahtbügels in dem skizzierten Beispiel mit zwei parallelen Drahtabschnitten D32 zwischen dem zweiten Scherengelenk G32 und dem Blechkörper BK3 ausgeführt und wiederum in Richtung zwischen dem zweiten Scherengelenk G32 und dem Mittengelenk GZ3 relativ zu dem Blechkörper BK3 längsverschiebbar an dem Blechkörper BK3 geführt.

In der Darstellung nach Fig. 6 liegt vorteilhafterweise der Fortsatz F32 hinter dem Fortsatz F31, so dass beim Aufrichten des Scherenbügels zum einen der Fortsatz F32 problemlos in den von der U-Form des ersten Scherenbügels umgebenen Raum durch den ersten Bügelschenkel hindurch greifen kann und zum anderen der erste Fortsatz F31 an dem Fortsatz F32 vorbei gleiten kann.

In Fig. 5 ist eine Zwischenstellung des Scherenbügels der in Fig. 4 in vollständig gestreckter Stellung dargestellten Ausführung skizziert. Die in Fig. 5 dargestellte Zwischenstellung des Scherenbügels kann als eine Stellung angesehen werden, welche bei dem Versuch, den Scherenbügel bei geschlossenem und verplombtem Schiebeverdeck manuell anzuheben, um in den Laderaum durchzugreifen, eingenommen wird. Dabei ist ersichtlich, dass die Fortsätze F31 und F32 besonders wirkungsvoll den beim Anheben des Scherenbügels zwischen dem Scherenbügel und der oberen Begrenzung des Dachholms entstehenden Raum einschränken. Soweit der in Fig. 5 mit L3 bezeichnete, beim Anheben des Scherenbügels entstehende Freiraum für einen Durchgriff problematisch ist, kann in diesem Bereich das durch einen Drahtbügel gebildete zweite Teil des zweiten Bügelschenkels in dem den Freiraum L3 betreffenden Abschnitt in zu dem Ausführungsbeispiel nach Fig. 1 und Fig. 2 entsprechender Weise mit einer nach unten ragenden Umbiegung eines Drahtabschnitts blockiert werden.

Die Bügelschenkel können im Detail von den skizzierten Ausführungsformen abweichen. Die Ausführung des ersten Scherenbügels und des zweiten Teils des zweiten Scherenbügels als mehrfach umgebogene, einteilig durchgehende Drähte ist von den Kosten und der Fertigungstechnik von besonderem Vorteil. Die Ausbildung des ersten Teils des zweiten Scherenbügels als Blechkörper ist gleichfalls fertigungstechnisch und in Kostenhinsicht besonders günstig und bietet auf besonders günstige Weise eine Linearführung zwischen erstem und zweitem Teil des zweiten Bügelschenkels.

## Patentansprüche

1. Nutzfahrzeuganordnung mit einem Planen-Schiebeverdeck, welches eine Schiebemechanik mit entlang von Dachholmen (DH) verfahrbaren Rollenwagen (RW1; RW2) und benachbarte Rollenwagen (RW1; RW2) verbindende Scherenbügel enthält und zwischen einer geschlossenen Stellung mit flachem Verlauf der Plane (PL) und mit gestreckten Scherenbügel einerseits und einer geöffneten Stellung mit aufgerichteten Scherenbügeln und gefaltetem Planenverlauf verlagerbar ist, wobei die Scherenbügel jeweils zwei miteinander und mit benachbarten Rollenwagen (RW1; RW2) gelenkig verbundene Bügelschenkel enthalten, **dadurch gekennzeichnet, dass** die Scherenbügel zur Erschwerung des Durchgreifens zwischen Dachholm (DH) und Scherenbügeln in der geschlossenen Stellung Sperrmittel enthalten, wobei die Sperrmittel eines Scherenbügel an beiden Bügelschenkeln Fortsätze (F1, F21, F22; F31, F32) aufweisen, welche in der geschlossenen Stellung von den Bügelschenkeln nach unten ragen und in einer in Richtung der Scherengelenkachsen (G1, G2) der Scherenbügel weisenden Projektionsrichtung mit dem Dachholm (DH) überlappen und in der geöffneten Stellung in der Projektionsrichtung gegenseitig überlappen.

2. Nutzfahrzeuganordnung nach Anspruch 1, **dadurch gekennzeichnet, dass** wenigstens ein Fortsatz (F21) durch einen Blechfortsatz gebildet ist.

3. Nutzfahrzeuganordnung nach Anspruch 2, **dadurch gekennzeichnet, dass** der Blechfortsatz Teil eines einen Bügelschenkeln bildenden Blechkörpers (BK) ist.

4. Nutzfahrzeuganordnung nach einem der Ansprüche 1 bis 3, **dadurch gekennzeichnet, dass** wenigstens ein Fortsatz (F22) einen mehrfach umgebogenen Drahtabschnitt (D2) aufweist, der einen Teil eines Bügelschenkels bildet.

5. Nutzfahrzeuganordnung nach einem der Ansprüche 1 bis 4, **dadurch gekennzeichnet, dass** wenigstens ein Fortsatz bei gestreckten Scherenbügeln seitlich neben dem Dachholm liegt.

6. Nutzfahrzeuganordnung nach einem der Ansprüche 1 bis 5, **dadurch gekennzeichnet, dass** die Scherenbügel in aufgerichteter Stellung eine in Projektionsrichtung im wesentlichen dreieckige Innenfläche über dem Dachholm begrenzen.

7. Nutzfahrzeuganordnung nach Anspruch 6, **dadurch gekennzeichnet, dass** die Fortsätze (F1, F21, F22; F31, F32) in Holmrichtung nicht über die dreieckige Innenfläche hinaus ragen.

8. Nutzfahrzeuganordnung nach Anspruch 6, **dadurch gekennzeichnet, dass** wenigstens ein Fortsatz (F1, F21, F22; F31, F32) in Holmrichtung über die dreieckige Innenfläche hinausragt.

9. Nutzfahrzeuganordnung nach Anspruch 8, **dadurch gekennzeichnet, dass** ein Fortsatz (F1, F21, F22; F31, F32) eines Bügelschenkels durch den an deren Bügelschenkel durchgreift.

10. Nutzfahrzeuganordnung nach einem der Ansprüche 1 bis 9, **dadurch gekennzeichnet, dass** die Bügelschenkel unmittelbar miteinander verbunden sind.

11. Nutzfahrzeuganordnung nach einem der Ansprüche 1 bis 10, **dadurch gekennzeichnet, dass** die Bügelschenkel in sich starr sind.

12. Nutzfahrzeuganordnung nach einem der Ansprüche 1 bis 11, **dadurch gekennzeichnet, dass** wenigstens ein Bügelschenkel eines Scherenbügels längenveränderlich ist mit bei aufgerichtetem Scherenbügelgeringerer Länge als bei gestrecktem Scherenbügel.

## Claims

1. Commercial vehicle assembly with a tarpaulin sliding roof which contains a sliding mechanism with roller carriages (RW1; RW2), which are movable along roof struts (DH), and scissor-type brackets connecting adjacent roller carriages (RW1; RW2), and is shiftable between a closed position, with a flat profile of the tarpaulin (PL) and with scissor-type brackets extended on one side, and an open position, with scissor-type brackets set upright and a folded tarpaulin profile, wherein the scissor-type brackets each contain two bracket legs which are connected in an articulated manner to each other and to adjacent roller carriages (RW1; RW2), **characterized in that** the scissor-type brackets contain locking means for making it difficult to reach through between roof strut (DH) and scissor-type brackets in the closed position, wherein the locking means of a scissor-type bracket have extensions (F1, F21, F22; F31, F32) on both bracket legs, said extensions projecting downwards in the closed position of the bracket legs and overlapping with the roof strut (DH) in a direction of projection pointing in the direction of the scissor joint axes (G1, G2) of the scissor-type brackets, and overlapping each other in the direction of projection in the open position.

2. Commercial vehicle assembly according to Claim 1, **characterized in that** at least one extension (F21) is formed by a sheet-metal extension.

3. Commercial vehicle assembly according to Claim 2, **characterized in that** the sheet-metal extension is part of a sheet-metal body (BK) forming a bracket leg.

4. Commercial vehicle assembly according to one of Claims 1 to 3, **characterized in that** at least one extension (F22) has a wire section (D2) which is bent over repeatedly and forms part of a bracket leg.

5. Commercial vehicle assembly according to one of Claims 1 to 4, **characterized in that**, when the scissor-type brackets are extended, at least one extension lies laterally next to the roof strut.

6. Commercial vehicle assembly according to one of Claims 1 to 5, **characterized in that** the scissor-type brackets in the upright position bound an inner surface, which is substantially triangular in the direction of projection, above the roof strut.

7. Commercial vehicle assembly according to Claim 6, **characterized in that** the extensions (F1, F21, F22; F31, F32) do not project in the direction of the strut beyond the triangular inner surface.

8. Commercial vehicle assembly according to Claim 6, **characterized in that** at least one extension (F1, F21, F22; F31, F32) projects in the direction of the strut beyond the triangular inner surface.

9. Commercial vehicle assembly according to Claim 8, **characterized in that** an extension (F1, F21, F22; F31, F32) of a bracket leg reaches through the other bracket leg.

10. Commercial vehicle assembly according to one of Claims 1 to 9, **characterized in that** the bracket legs are connected directly to each other.

11. Commercial vehicle assembly according to one of Claims 1 to 10, **characterized in that** the bracket legs are rigid per se.

12. Commercial vehicle assembly according to one of Claims 1 to 11, **characterized in that** at least one bracket leg of a scissor-type bracket is variable in length with a length which is smaller when the scissor-type bracket is set upright than when the scissor-type bracket is extended.

## Revendications

1. Agencement de véhicule utilitaire comprenant une toile de toit ouvrant qui comprend un mécanisme de coulissement avec des étriers à ciseaux reliant des chariots à rouleaux (RW1 ; RW2) déplaçables le long de longerons du toit (DH) et des chariots à rouleaux adjacents (RW1 ; RW2) et déplaçable entre une position fermée avec une allure plate de la toile (PL) et les étriers à ciseaux étirés d'une part et une position ouverte avec les étriers à ciseaux redressés et une allure pliée de la toile d'autre part, les étriers à ciseaux comprenant à chaque fois deux branches d'étrier connectées de manière articulée l'une à l'autre et à des chariots à rouleaux adjacents (RW1 ; RW2), **caractérisé en ce que** les étriers à ciseaux comprennent des moyens de blocage pour rendre plus difficile l'engagement entre le longeron de toit (DH) et les étriers à ciseaux dans la position fermée, les moyens de blocage d'un étrier à ciseaux présentant des saillies (F1, F21, F22 ; F31, F32) au niveau des deux branches d'étrier, lesquelles saillies font saillie vers le bas dans la position fermée des branches d'étrier et chevauchent le longeron de toit (DH) dans une direction de projection tournée dans la direction des axes d'articulation des ciseaux (G1, G2) des étriers à ciseaux et se chevauchent mutuellement dans la direction de projection dans la position ouverte.

2. Agencement de véhicule utilitaire selon la revendication 1, **caractérisé en ce qu'**au moins une saillie (F21) est formée par une saillie en tôle.

3. Agencement de véhicule utilitaire selon la revendication 2, **caractérisé en ce que** la saillie en tôle fait partie d'un corps en tôle (BK) formant une branche d'étrier.

4. Agencement de véhicule utilitaire selon l'une quelconque des revendications 1 à 3, **caractérisé en ce qu'**au moins une saillie (F22) présente une portion de fil métallique (D2) recourbée plusieurs fois qui forme une partie d'une branche d'étrier.

5. Agencement de véhicule utilitaire selon l'une quelconque des revendications 1 à 4, **caractérisé en ce qu'**au moins une saillie est située latéralement à côté du longeron de toit lorsque les étriers à ciseaux sont étirés.

6. Agencement de véhicule utilitaire selon l'une quelconque des revendications 1 à 5, **caractérisé en ce que** les étriers à ciseaux redressés délimitent une surface interne essentiellement triangulaire dans la direction de projection au-dessus du longeron de toit.

7. Agencement de véhicule utilitaire selon la revendication 6, **caractérisé en ce que** les saillies (F1, F21, F22 ; F31, F32) ne font pas saillie dans la direction du longeron au-delà de la surface interne triangulaire.

8. Agencement de véhicule utilitaire selon la revendication 6, **caractérisé en ce qu'**au moins une saillie (F1, F21, F22 ; F31, F32) fait saillie dans la direction du longeron au-delà de la surface interne triangulaire.

9. Agencement de véhicule utilitaire selon la revendication 8, **caractérisé en ce qu'**une saillie (F1, F21, F22 ; F31, F32) d'une branche d'étrier s'engage à travers l'autre branche d'étrier.

10. Agencement de véhicule utilitaire selon l'une quelconque des revendications 1 à 9, **caractérisé en ce que** les branches d'étrier sont connectées directement l'une à l'autre.

11. Agencement de véhicule utilitaire selon l'une quelconque des revendications 1 à 10, **caractérisé en ce que** les branches d'étrier sont rigides en soi.

12. Agencement de véhicule utilitaire selon l'une quelconque des revendications 1 à 11, **caractérisé en ce qu'**au moins une branche d'étrier d'un étrier à ciseaux a une longueur variable avec une plus faible longueur lorsque l'étrier à ciseaux est redressé que lorsque l'étrier à ciseaux est étiré.
